# EUROPEAN PATENT APPLICATION

(11) **EP 4 693 722 A1**
(43) Date of publication of application: **11.02.2026**
(21) Application number: 24927583.5
(22) Date of filing: 12.12.2024
(51) Int. Cl.: H01M 50/691, H01M 50/367, H01M 50/383, H01M 50/249

(54) **BATTERY PACK CASE, BATTERY PACK, AND VEHICLE COMPRISING SAME**

(30) Priority: 12.06.2024 KR 20240076519
(71) Applicant: LG Energy Solution, Ltd., Seoul 07335 (KR)
(72) Inventor: JUNG, Ki Taek, Daejeon 34122 (KR)
(74) Representative: BCKIP Part mbB
(86) International application number: PCT/KR2024/020289
(87) International publication number: WO 2025/258768

(57) **Abstract**

Disclosed are a battery pack case including a base plate forming one side of the battery pack case and having a through hole formed to communicate an internal space of the battery pack case with the outside, an outer plate spaced apart from an outer surface of the base plate, blocking the through hole from being exposed to the outside, and forming a separation space between the outer plate and the base plate, and a discharge path formed inside the separation space and bent multiple times, one end of which is connected to the through hole and the other end of which is connected to the outside of the separation space, a battery pack, and a vehicle including the same.

## Description

### [TECHNICAL FIELD]

The present disclosure relates to a battery pack case and a battery pack capable of effectively discharging gas generated in the event of a fire inside a battery pack case in which a cooling device is installed and a cooling material leaking from the cooling device to the outside to improved safety, and a vehicle including the same.

### [BACKGROUND ART]

Recently, technologies for reducing carbon are being actively developed to solve environmental problems such as abnormal temperatures. In order to reduce carbon, it is necessary to produce energy in an eco-friendly manner rather than producing energy using fossil fuels, store the produced energy in the form of electric energy, and use the stored electric energy in vehicles, various industrial sites, and homes.

In order to utilize electric energy for reducing carbon, the use of a battery that can store and extract electric energy is essential. Therefore, in order to sufficiently store electric energy and use the same without inconvenience, it is necessary to secure the performance of the battery.

Batteries mainly utilize the oxidation-reduction reaction of metal ions, high-density metal ions are used to increase the capacity, charge/discharge performance, and efficiency of a battery, and much research is being conducted on materials constituting electrolytes and solid electrolytes. However, as battery performance improves, there is a problem of decreased stability in general.

Batteries used in vehicles, industries, and homes are manufactured as physical units called packs. A battery pack performs functions of preventing fire from propagating to the outside in the event of an accident such as battery thermal runaway by embedding multiple battery cells inside a battery case and sealing the same, and protecting the internal battery cells from deterioration due to the influence of the external environment or damage due to physical factors.

Multiple battery cells are embedded in a battery pack in an intermediate form of a module or an assembly (cell module assembly (CMA)). In the case of a battery module or assembly, multiple battery cells are assembled into a single module or assembly, and multiple modules are fastened inside a pack case, thereby completing a battery pack. When servicing a battery, maintenance is made easy by allowing maintenance to be performed in units of such modules or assemblies.

Each of multiple unit battery cells constituting a module or assembly is composed of a positive electrode, a negative electrode, and an electrolyte. Since battery cells generate heat during charging and discharging, effective heat dissipation for the battery cells is required. In addition, from the perspective of battery modules, assemblies, and battery packs, design for efficient heat dissipation is necessary to prevent safety accidents.

Meanwhile, batteries may deteriorate due to manufacturing errors, excessive charging and discharging, and aging. If battery deterioration continues, it can eventually cause a fire. Therefore, it is necessary to prepare in advance to prevent a fire from occurring in batteries. To this end, it is important to continuously sense the status of a battery, recognize and respond to a problem when the problem has occurred, and it is necessary to minimize damage when an unexpected problem occurs.

In particular, if battery deterioration continues, battery cells rapidly heat up, generating gas or flames, causing a thermal runaway phenomenon. If a thermal runaway occurs in one battery cell, a thermal propagation phenomenon in which gas or flames propagate to adjacent battery cells or battery modules occurs in a chain. Therefore, when thermal runaway occurs in a specific battery cell or battery module, it is essential to effectively discharge gas caused by the thermal runaway to the outside while preventing flames from propagating to other parts in order to secure battery efficiency and safety.

Meanwhile, in the case of a battery pack case that includes a cooling device provided for battery deterioration, if a fire occurs inside the battery pack, a cooling hose and the like may be damaged by high heat, causing a phenomenon in which cooling materials or foreign substances leak inside the battery pack case.

Since the leaked cooling materials or foreign substances may be conductive fluids, there is a possibility of a short circuit occurring in a battery cell, a terminal, etc. Therefore, if a cooling device is installed inside the battery pack case, a technique for effectively handling a cooling material or foreign substances is required to prevent a short circuit in such an accident.

The matters described as background technology above are only intended to enhance understanding of the background of the present disclosure and should not be taken as an acknowledgment that they correspond to prior art already known to those skilled in the art.

### [DETAILED DESCRIPTION OF INVENTION]

### [TECHNICAL PROBLEMS]

An object of the present disclosure proposed to solve such problems is to provide a battery pack case and a battery pack capable of smoothly discharging gas generated in the event of a fire in a specific battery cell or battery module in the battery pack case having a cooling device installed thereinside, and at the same time, effectively discharging a cooling material leaking from the cooling device damaged by the fire, thereby preventing a short circuit inside the battery pack case and improving battery safety, and a vehicle including the same.

The technical objects to be achieved in the present disclosure are not limited to the technical objects mentioned above, and other technical objects not mentioned will be clearly understood by those skilled in the art to which the present disclosure belongs from the description below.

### [TECHNICAL SOLUTION]

A battery pack case according to the present disclosure to achieve the aforementioned object includes a base plate forming one side of the battery pack case and having a through hole formed to communicate an internal space of the battery pack case with the outside, an outer plate spaced apart from an outer surface of the base plate, blocking the through hole from being exposed to the outside, and forming a separation space between the outer plate and the base plate, and a discharge path formed inside the separation space and bent multiple times, one end of which is connected to the through hole and the other end of which is connected to the outside of the separation space.

In the battery pack case according to the present disclosure, the outer plate may be formed to be inclined downward toward the outside from a point corresponding to the through hole such that a height of the separation space increases toward the outside from the point corresponding to the through hole.

In the battery pack case according to the present disclosure, the outer plate may have a side wall formed along the perimeter and may be connected to the base plate through the side wall to form the separation space.

In the battery pack case according to the present disclosure, the discharge path may extend in a zigzag shape from one end connected to the through hole to the other end connected to the outside.

In the battery pack case according to the present disclosure, the discharge path may include a plurality of longitudinal flow paths arranged in parallel in the longitudinal direction of the outer plate, and a pair of adjacent longitudinal flow paths may be alternately connected to each other at one end and the other end through a widthwise connecting part, thereby forming a single discharge path.

In the battery pack case according to the present disclosure, each longitudinal flow path may be connected to an adjacent longitudinal flow path on one side at one end through the widthwise connecting part, and connected to an adjacent longitudinal flow path on the other side at the other end through the widthwise connecting part.

In the battery pack case according to the present disclosure, a plurality of discharge paths may be formed on both sides of the separation space around the through hole of the base plate.

In the battery pack case according to the present disclosure, a plurality of discharge paths may be formed, and one end of each discharge path may be connected to the through hole and other ends of the discharge paths may be connected to the outside of the separation space at different points such that gas or a cooling material is discharged.

In the battery pack case according to the present disclosure, the discharge path may be formed such that the cross-sectional area of the discharge path increases with decreasing distance to the outside from a point corresponding to the through hole.

In the battery pack case according to the present disclosure, a plurality of partition walls may be formed in the separation space, and the discharge path may be formed in a space between the partition walls.

In the battery pack case according to the present disclosure, the partition walls may be spaced apart from each other, the longitudinal flow paths may be formed between the partition walls, and one end of the partition wall may be opened to form the widthwise connecting part connecting adjacent longitudinal flow paths.

In the battery pack case according to the present disclosure, the discharge path may be formed between a pair of adjacent partition walls, and a gap between the pair of adjacent partition walls may increase with decreasing distance to the outside from a point corresponding to the through hole.

In the battery pack case according to the present disclosure, lower ends of the partition walls in the separation space may be connected to the outer plate in a state in which upper ends of the partition walls are connected to the base plate.

In the battery pack case according to the present disclosure, the base plate may form a bottom surface of the battery pack case, battery assemblies may be built into the battery pack case, and the through hole of the base plate may be formed at a point between the battery assemblies built into the battery pack case.

In the battery pack case according to the present disclosure, a cooling channel may be provided between the battery assemblies built into the battery pack case and the base plate, and the through hole of the base plate may be formed at a position corresponding to a cooling port of the cooling channel or a cooling hose connected to the cooling port such that a cooling material leaking from the cooling port or the cooling hose flows into the through hole due to the weight of the cooling material.

In the battery pack case according to the present disclosure, a filter cover may be formed in the through hole of the base plate such that foreign substances are prevented from flowing into the separation space.

In the battery pack case according to the present disclosure, a flange may be formed on the inner surface of the through hole to protrude toward the inside of the through hole, and the filter cover may be coupled to the flange.

In the battery pack case according to the present disclosure, a plurality of support parts may be formed on the flange to protrude toward the filter cover, and the filter cover may be mounted on the support parts such that the filter cover and the flange are spaced apart from each other.

In the battery pack case according to the present disclosure, the filter cover may be bonded to the base plate by being fixed to the support parts.

In the battery pack case according to the present disclosure, the filter cover may be formed in a plate shape and set inside the through hole, the outer surface of the filter cover may be spaced apart from the inner surface of the through hole, and the internal space of the battery pack case may communicate with the separation space through the gap between the filter cover and the through hole.

A battery pack according to the present disclosure includes the aforementioned battery pack case.

A vehicle according to the present disclosure includes the aforementioned battery pack.

### [EFFECT OF INVENTION]

According to the battery pack case, the battery pack, and the vehicle including the same according to the present disclosure, when a fire occurs in a battery pack having a cooling device installed inside, it is possible to smoothly discharge gas caused by the fire and simultaneously effectively discharge a cooling material leaking from the cooling device damaged by the fire to the outside, thereby preventing damage such as a short circuit occurring inside the battery pack.

The effects obtained from the present disclosure are not limited to the effects mentioned above, and other effects not mentioned can be clearly understood by those skilled in the art to which the present disclosure belongs from the description below.

### [BRIEF DESCRIPTION OF THE DRAWING]

FIG. 1 is a cross-sectional view of a battery pack case according to an embodiment of the present disclosure.
FIG. 2 is a diagram showing a discharge path of the battery pack case shown in FIG. 1.
FIG. 3 is a diagram showing a cross-section at a point including the discharge path of the battery pack case shown in FIG. 2.
FIG. 4 is a diagram showing a cross-section at a point including a discharge path of the battery pack case according to another embodiment of the present disclosure.
FIG. 5 is a top view of the battery pack case shown in FIG. 1.
FIG. 6 is a diagram showing a through hole of the battery pack case shown in FIG. 1.
FIG. 7 is a diagram showing a state in which a filter cover is mounted in the through hole of the battery pack case shown in FIG. 6.
FIG. 8 is a diagram showing a cross-section at a through-hole point of the battery pack case shown in FIG. 1.
FIG. 9 is a diagram showing a battery pack and a vehicle to which the battery pack case shown in FIG. 1 is applied.

### [BEST MODE FOR CARRYING OUT THE INVENTION]

In the following description, a detailed description of known functions and configurations incorporated herein will be omitted when it may obscure the subject matter of the present disclosure. The same reference numbers will be used in the drawings to refer to the same or like parts. In addition, the attached drawings are only intended to facilitate easy understanding of the embodiments disclosed in this specification, and the technical ideas disclosed in this specification are not limited by the attached drawings, and should be understood to include all modifications, equivalents, or substitutes included in the spirit and technical scope of the present disclosure.

An element described in the singular form is intended to include a plurality of elements unless the context clearly indicates otherwise. In the present specification, the term "comprise" or "include" is intended to specify the presence of a described feature, number, step, operation, component, part, or a combination thereof, but should be understood as not excluding in advance the possibility of the presence or addition of one or more other features, numbers, steps, operations, components, parts, or combinations thereof.

The suffixes "module" and "unit" of elements used in the following description are used for convenience of description and thus can be used interchangeably and do not have any distinguishable meanings or functions. When a component is "coupled" or "connected" to another component, it should be understood that a third component may be present between the two components although the component may be directly coupled or connected to the other component. When a component is "directly coupled" or "directly connected" to another component, it should be understood that no element is present between the two components.

Hereinafter, embodiments disclosed in this specification will be described in detail with reference to the attached drawings. Regardless of the drawing symbols, identical or similar components will be given the same reference numerals and redundant descriptions thereof will be omitted. A battery is made up of several battery cells that form a single battery module, and multiple battery modules are assembled into a battery pack BP that is installed in a vehicle. The phenomenon in which a battery cell, the basic unit of a battery, goes out of control and ignites on its own is called thermal runaway, and the phenomenon in which gas or flames spread to adjacent battery cells or battery modules when a specific battery cell or battery module experiences thermal runaway is called thermal propagation.

Batteries experience thermal runaway due to various causes, such as mechanical, electrical, and thermal abuse, and due to the nature of batteries that are vulnerable to deterioration, thermal propagation is likely to occur in a chain reaction when thermal runaway occurs. Therefore, efforts are needed to minimize thermal propagation by smoothly discharging gas generated when a specific battery cell or battery module experiences thermal runaway to the outside while preventing flames from spreading to adjacent battery cells or battery modules.

Meanwhile, short circuits can occur in battery cells due to various causes. In the event of a short circuit in a battery cell, a high current flows momentarily through the battery cell which is a conductor, causing temperature increase, which will lead to thermal runaway of the battery cell, increasing the risk of fire in the entire battery. Therefore, a technique for preventing a short circuit in a battery cell needs to be considered to minimize thermal propagation.

In the event of thermal runaway due to deterioration or short circuit of a battery cell, not only the battery cell but also a cooling device 700, 720, and 740 installed inside a battery pack BP will be damaged in a high temperature or high pressure environment, and a cooling material or foreign substances inside the cooling device 700, 720, and 740 will leak to the outside of the cooling device 700, 720, and 740 due to damage to the cooling device 700, 720, and 740. Since there is a risk that the cooling material or foreign substances discharged from the cooling device 700, 720, and 740 may cause another accident, such as a short circuit, inside the battery pack case, a technique for effectively dealing with such a cooling material or foreign substances inside or outside the battery pack case is required.

Therefore, it is necessary to smoothly discharge gas generated during thermal runaway in a specific battery cell or battery module and a cooling material leaking from a cooling device to the outside and to filter out flames and foreign substances generated during the thermal runaway to improve battery stability.

Conventionally, venting valves are installed in the front and rear directions of a battery pack BP to discharge gas generated during thermal runaway or a cooling material leaked due to damage to the cooling device 700, 720, and 740 caused by thermal runaway. However, since the gas or cooling material inside a battery pack case tends to flow and collect in the vertical direction of the battery pack BP, it is difficult to smoothly discharge the same through the venting valves installed in the front and rear directions of the battery pack BP.

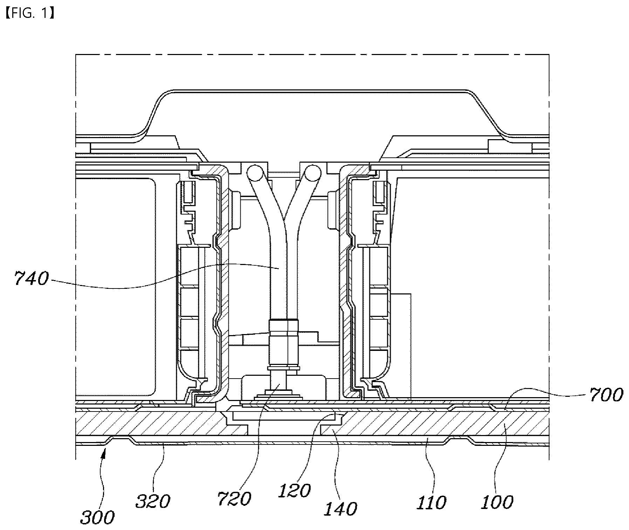

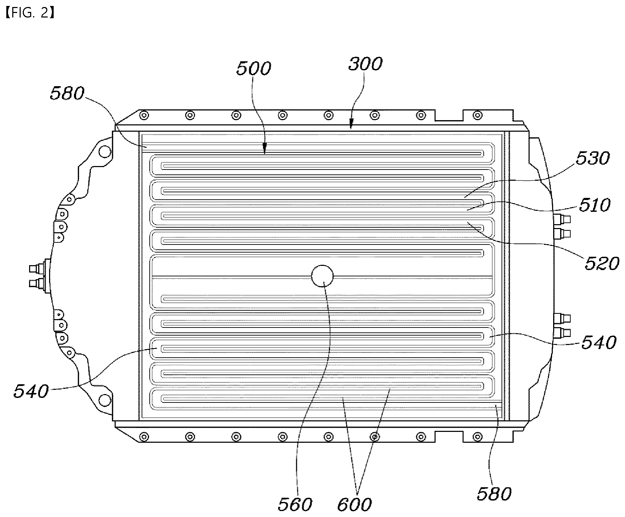

The present disclosure proposes a battery pack case in which an outer plate 300 is installed on one side of the battery pack case, such as the bottom thereof, as shown in FIG. 1 or FIG. 2, to guide gas generated due to thermal runaway or a cooling material to the outer plate 300, and a discharge path 500 is provided in a separation space 110 between a base plate 100 and the outer plate 300 such that the gas or the cooling material can be safely discharged to the outside.

Specifically, the battery pack case of the present disclosure includes the base plate 100, the outer plate 300, and the discharge path 500. The base plate 100 forms one side of the battery pack case, as shown in FIG. 1, and a through hole 120 is formed in one side of the base plate 100 to communicate with the internal space of the battery pack case with the outside.

The outer plate 300 is disposed to be spaced apart from the outer surface of the base plate 100 as shown in FIG. 1, thereby blocking the penetration hole 120 from being exposed to the outside, and forming the separation space 110 between the outer plate 300 and the base plate 100 such that gas generated due to thermal runaway or a cooling material can be collected. The gas or cooling material collected in the separation space 110 is guided through the discharge path 500 that is formed by being bent multiple times inside the separation space 110 as shown in FIG. 2, one end of which is connected to the through hole 120 and the other end of which is connected to the outside of the separation space 110, to be discharged to the outside of the battery pack case.

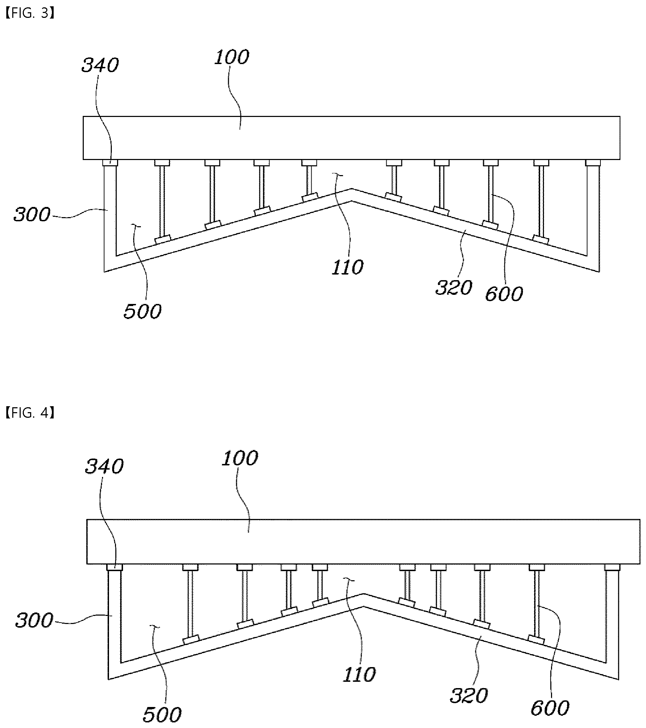

The outer plate 300 receives and stores gas or a cooling material from the battery pack case and discharge the same by being bonded to the outside of the battery pack case, as shown in FIG. 1 or FIG. 3. The outer plate 300 is formed in a shape that slopes downwards toward the outside from a point corresponding to the through hole 120 of the base plate 100. Since the outer plate 300 is formed to slope downwards from the point corresponding to the through hole 120 of the base plate 100, the height of the separation space 110 increases with decreasing distance to the outside from the point corresponding to the through hole 120, and thus the gas or cooling material discharged from the battery pack case can be naturally discharged to the outside along an inclined surface 320 due to its own weight.

Since the outer plate 300 is bonded to one side of the battery pack case, the outer plate 300 may be formed of a metal material of the same type of the metal material of the battery pack case in order to increase the bonding strength with respect to the battery pack case. In addition, the outer plate 300 may be formed thinner than the base plate 100 in consideration of the bonding strength with respect to the base plate 100 to achieve the bonding strength and weight reduction.

A side wall is formed along the perimeter of the outer plate 300, and the outer plate 300 is bonded to the base plate 100 through the side wall to form the separation space 110. Since it is desirable to form the outer plate 300 of the same material as the base plate 100 of the battery pack case, it is desirable that the outer plate 300 and the base plate 100 be combined by a method such as welding 340 or fusion bonding, but in some cases, they may be formed of different materials and combined by a mechanical bonding method or an adhesive bonding method.

In addition, since gas or a cooling material inside the battery pack case tends to gather downward due to gravity, it is preferable that the outer plate 300 be bonded to the lower end of the base plate 100 as illustrated in FIG. 1. However, the outer plate 300 is not necessarily bonded to the lower end of the base plate 100 in the battery pack case, but may be bonded in various directions such as the upper end or the side end to store and discharge the gas or cooling material.

In the present disclosure, since the gas or cooling material discharged from the battery pack case is stored in the separation space 110 provided between the base plate 100 and the outer plate 300, the discharge path 500 for discharging the stored gas or cooling material to the outside is formed in the separation space 110, as illustrated in FIG. 2. The discharge path 500 extends in a zigzag shape from one end connected to the through hole 120 to the other end connected to the outside, and thus the gas or cooling material discharged into the separation space 110 is guided to the outside with a reduced flow rate through the zigzag-shaped discharge path 500.

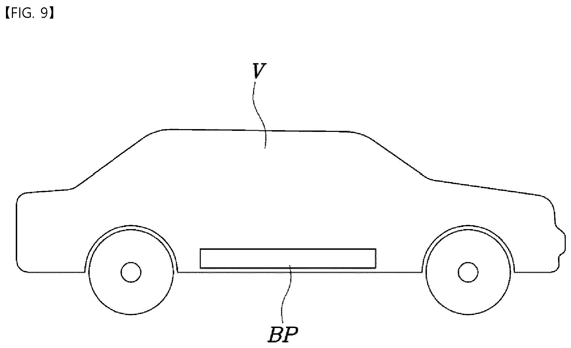

As shown in FIG. 9, the battery is installed inside a vehicle in the form of a battery pack, and since many vehicle parts are installed inside the vehicle in addition to the battery pack BP, it is important to reduce the flow rate of the gas or cooling material discharged from the battery pack BP. In the case of gas, if high-pressure gas is discharged instantaneously, other vehicle parts around the battery pack BP can be easily damaged, which can cause secondary damage. Furthermore, since gas generated due to a fire in a battery cell or battery module contains flammable particles, secondary fire or other damage can occur inside the vehicle if a large amount of flammable particles are discharged to the outside.

Therefore, by forming the discharge path 500 in the separation space 110 in a zigzag shape as shown in FIG. 2, the flow rate of the gas decreases since the gas experiences resistance due to the physical shape of the discharge path 500, and the kinetic energy of flammable particles contained in the gas also decreases due to the zigzag shape of the discharge path 500 and thus the flammable particles are captured within the discharge path 500 due to their own weight. As a result, by forming the discharge path 500 in a zigzag shape, the phenomenon in which high-pressure gas is momentarily discharged to the outside and thus internal vehicle components are damaged can be prevented, and the phenomenon in which flammable particles contained in the gas are discharged to the outside of the vehicle can be minimized, thereby preventing secondary damage such as a fire.

In the case of the cooling material, if a large amount of cooling material stored inside the outer plate 300 is momentarily discharged to the outside, damage may occur to vehicle components provided outside the battery pack BP and the entire vehicle. Therefore, by forming the discharge path 500 in a zigzag shape in the separation space 110, the flow rate of the cooling material can be reduced, and only an appropriate amount of cooling material can be discharged to the outside, thereby increasing battery stability.

The discharge path 500 formed in the separation space 110 includes a plurality of longitudinal flow paths 510 arranged in parallel in the longitudinal direction of the outer plate 300, as shown in FIG. 2, and a pair of adjacent longitudinal flow paths 510 may be alternately connected to each other at one end and the other end thereof through a width-direction connecting part 540, thereby forming one discharge path 500. Specifically, a longitudinal flow path 510 is connected to an adjacent longitudinal flow path 520 on one side through the widthwise connecting part 540 at one end, and is connected to an adjacent longitudinal flow path 530 on the other side through the widthwise connecting part 540 at the other end, and thus a single discharge path 500 in a zigzag shape can be formed as a result.

The longitudinal flow paths 510 arranged in parallel in the longitudinal direction of the outer plate 300 and the widthwise connecting parts 540 arranged in the widthwise direction of the outer plate 300 may be formed of the same material to increase the bonding properties of the single discharge path 500. In addition, the longitudinal flow paths 510 and the widthwise connecting parts 540 may be formed in consideration of a fitting connection structure during a molding step to be mechanically connected, or may be connected in various ways such as welding in order to effectively guide a fluid such as a gas or a cooling material without leakage.

As shown in FIG. 2, a plurality of discharge paths 500 may be formed on both sides of the separation space 110 based on the through hole 120 of the base plate 100. Since the outer plate 300 is formed to be inclined downward toward the outside from a point corresponding to the through hole 120 of the base plate 100, the discharge path 500 is also formed to be inclined downward toward the outside from a point corresponding to the through hole 120. Accordingly, a gas or a cooling material introduced into the discharge path 500 through the through hole 120 can be smoothly discharged to the outside through the discharge path 500 formed along the inclined surface 320. Accordingly, the discharge path 500 may be formed on each inclined surface 320 of the outer plate 300, and in this case, since a plurality of inclined surfaces 320 is formed toward the outside from the through hole 120 of the base plate 100, a plurality of discharge paths 500 may also be formed within the separation space 110 around on the through hole 120 of the base plate 100.

When a plurality of discharge paths 500 is formed in the separation space 110 between the base plate 100 and the outer plate 300 as shown in FIG. 2, each discharge path 500 needs to be designed such that one end is connected to the through hole 120 and the other end is connected to the outside of the separation space 110 such that a gas or a cooling material can be smoothly discharged. In this case, in the case of one end connected to the through hole 120 of the base plate 100, a gas generated during thermal runaway or a cooling material may be received from the through hole 120 through one inlet 560, but it is appropriate that the other ends of the discharge paths 500 are connected to the outside of the separation space 110 at different points. By forming outlets 580 of the plurality of discharge paths 500 at different points, the gas or cooling material can be effectively distributed and discharged, and accordingly, the gas or cooling material can be discharged to the outside with a reduced flow rate.

As a method for reducing the flow rate of the gas or cooling material flowing into the outer plate 300 through the through hole 120 of the base plate 100, there is a method of shaping the cross-sectional area of the discharge path 500 such that the cross-sectional area increases with decreasing distance to the outside from a point corresponding to the through hole 120 of the base plate 100. In the case of a fluid, from the perspective of fluid dynamics, the flow rate and the cross-sectional area of the flow path are positively correlated, and the cross-sectional area of the flow path and the flow rate are negatively correlated. Therefore, by increasing the cross-sectional area of the discharge path 500 with decreasing distance to the outside from the through hole 120 along the inclined surface 320, the flow rate of the fluid, which is the gas or cooling material, can be reduced. Therefore, by designing the cross-sectional area of the discharge path 500 such that it increases toward the outside from the through hole 120, the gas or cooling material can be discharged to the outside with a reduced flow rate, thereby improving battery safety.

In the present disclosure, the separation space 110 is formed between the base plate 100 and the outer plate 300, and the discharge path 500 whose one end and the other end are connected to the through hole 120 and the outside is formed in the separation space 110. A representative method for forming the discharge path 500 is a method of installing a partition wall 600 inside the separation space 110. Through this method, a plurality of partition walls 600 is formed in the separation space 110 and the discharge path 500 is formed between the partition walls 600 such that the gas or cooling material introduced into the separation space 110 through the through hole 120 of the base plate 100 is guided through the discharge path 500 formed along the partition walls 600 and discharged to the outside.

Referring to FIG. 2 or FIG. 3, when the discharge path 500 is formed through the partition walls 600, the partition walls 600 are spaced apart from each other, and the longitudinal flow path 510 is formed between the spaced partition walls 600. In addition, one end of the partition wall 600 is opened such that the widthwise connecting part 540 connecting a pair of adjacent longitudinal flow paths 510 is formed, and through this process, one discharge path 500 is formed. Since the discharge path 500 is naturally formed as the partition walls 600 are formed, gas or the cooling material is introduced into the separation space 110 and then guided to the outside through the partition walls 600. In addition, since the gas or cooling material is resisted by the partition walls 600, the flow rate of the gas or cooling material is reduced, and the kinetic energy of the cooling material is also reduced, and thus can be stored at a point between the partition walls 600 due to its own weight.

When the discharge path 500 is formed by the partition walls 600, the flow rate may be reduced by adjusting the gap between the partition walls 600. As shown in FIG. 3, by designing the partition walls 600 such that the gap between a pair of adjacent partition walls 600 increases with decreasing distance to the outside from the point corresponding to the through hole 120, the cross-sectional area of the discharge path 500 is increased, and as the cross-sectional area of the discharge path 500 increases, the flow rate of the gas or cooling material is reduced, and thus a large amount of gas or cooling material can be prevented from being discharged to the outside in an instant.

The partition walls 600 are formed by being bonded to the base plate 100 and the outer plate 300 because they serve to guide a fluid without leakage inside the separation space 110. Therefore, in order to increase the bonding strength with respect to the base plate 100 and the outer plate 300 and to enhance durability, the partition walls 600 may also be formed of a metal of the same material as the base plate 100 and the outer plate 300.

The base plate 100 may be thicker than the outer plate 300. For example, the base plate 100 may be formed of aluminum and the outer plate 300 may be formed of steel. It is preferable that the base plate 100 be formed of aluminum in order to facilitate forming and improve weldability with respect to other surrounding components and be thicker than the outer plate 300.

On the other hand, the outer plate 300 may be made of a steel material with high rigidity in order to secure formability for smooth inflow of gas or cooling material through the through hole 120. Instead, the outer plate 300 may be formed thinner than the base plate 100. In this way, by forming the plates 100 and 300 with different thicknesses using different materials, the durability of the overall battery pack case can be increased and the weight can be optimized.

The partition wall 600 formed in the separation space 110 may be bonded to the base plate 100 and the outer plate 300 in such a manner that the lower end thereof is bonded to the outer plate 300 while the upper end thereof is bonded to the base plate 100 in order to increase the bonding strength between the base plate 100 and the outer plate 300, as shown in FIG. 2 or FIG. 3. Since the base plate 100 constitutes the lower part of the battery pack case, it serves to support the battery cells or battery modules stacked inside the battery pack BP. Therefore, it is preferable that the base plate 100 be formed thicker than the outer plate 300.

Since the base plate 100 is formed thicker than the outer plate 300, it is advantageous in terms of stability that the partition walls 600 are first bonded to the thicker base plate 100 and then bonded to the outer plate 300. In addition, since the partition walls 600 may also be formed of a metal material like the base plate 100 or the outer plate 300, it is preferable that the partition walls 600 and the base plate 100 or the outer plate 300 be bounded by welding 340 as shown in FIG. 2 or FIG. 3. It may be advantageous in terms of durability to first connect the partition walls 600 to the base plate 100 by welding 340 or the like, and then connect the partition walls 600 to the outer plate 300 by welding 340 or the like, but in some cases, the outer plate 300 and the partition walls 600 may be first connected by welding 340 or the like, and then connect the base plate 100 thereto by welding 340 or the like.

However, if the partition walls 600 are formed of a different material from the base plate 100 or the outer plate 300 instead of a metal material, the partition walls 600 may be connected mechanically, such as by forming a groove in the base plate 100 or the outer plate 300 and fitting the partition walls 600 into the formed groove. In addition, the partition walls 600 and the base plate 100 or the outer plate 300 may be connected using an adhesive, and in this case, it is preferable that the adhesive be formed of a material that can withstand high-pressure gas. In this way, the partition walls 600 and the base plate 100 or the outer plate 300 may be connected in various ways in addition to welding 340.

When the partition walls 600 are connected to the base plate 100 or the outer plate 300, sealing is required as shown in FIG. 2 or FIG. 3 in order to prevent a fluid such as gas or a cooling material from leaking into the gap between the partition walls 600 and the base plate 100 or the outer plate 300. Fluids have the characteristic of flowing in a direction of less resistance. If the partition walls 600 are not sealed with respect to the base plate 100 or the outer plate 300 and thus a gap is created therebetween, the fluid flows through the gap between the partition walls 600 and the base plate 100 or the outer plate 300 where there is no resistance instead of flowing to the partition walls 600 where there is resistance, which may cause a risk of a large amount of gas or cooling material being discharged to the outside at once. Therefore, it is appropriate to seal the partition walls 600 with respect to the base plate 100 or the outer plate 300 by welding 340 or the like such that the gas or cooling material can be smoothly guided to the outside through the partition walls 600.

As described above, it is preferable that the discharge path 500 be formed through the partition walls 600. However, the discharge path 500 may also be formed by bending pipes of various shapes inside the separation space 110. In the case where the discharge path 500 is formed by bending a pipe, a gas or cooling material introduced through the through hole 120 of the base plate 100 can flow more stably along the discharge path 500, compared to the case where the discharge path 500 is formed through the partition walls 600, which is advantageous in terms of reducing the flow rate of the gas or cooling material. In addition, if the discharge path 500 has a shape that can reduce the flow rate of a gas or cooling material introduced from the battery pack case, the discharge path 500 can be designed in various ways in consideration of various factors such as the design cost and the design of the battery pack BP.

Referring to FIG. 1, the base plate 100 is connected to the bottom of the battery pack case, and a battery assembly is built into the inside of the battery pack case. The battery assembly includes all assembly forms such as battery modules or straps in the form of a housing or a case, and means a unit assembly of a plurality of battery cells. The through hole 120 is formed in the base plate 100 of the present disclosure to discharge a gas generated during thermal runaway or a cooling material leaking from a cooling device 700, 720, and 740 due to thermal runaway, and the through hole 120 of the base plate 100 may be formed at a point between a plurality of battery assemblies built into the battery pack case. Therefore, additional damage can be prevented or minimized by smoothly discharging a gas or cooling material generated during thermal runaway to the separation space 110 through the through hole 120 located at a point between the battery assemblies.

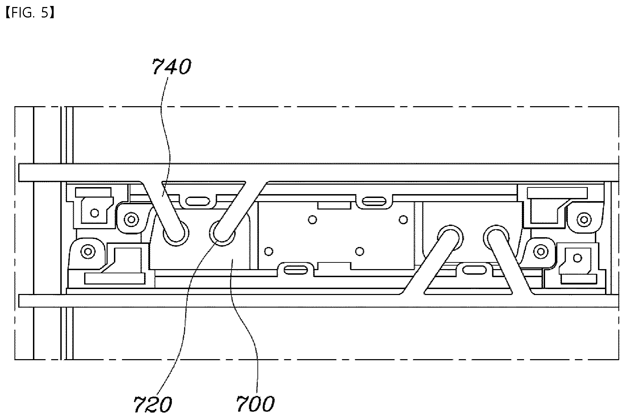

The cooling device 700, 720, and 740 built into the battery pack case is configured to cool the battery pack case when the internal temperature of the battery pack case rises, and may be composed of a cooling channel 700, a cooling port 720, and a cooling hose 740, as shown in FIG. 5. The cooling channel 700 is located between the battery assembly built into the battery pack case and the base plate 100 and cools the battery pack case over a wide range. Therefore, by forming the through hole 120 of the base plate 100 at a location corresponding to the cooling port 720 of the cooling channel 700 or the cooling hose 740 connected to the cooling port 720, the cooling material leaking from the cooling port 720 or the cooling hose 740 during thermal runaway can be introduced into the through hole 120 due to its own weight.

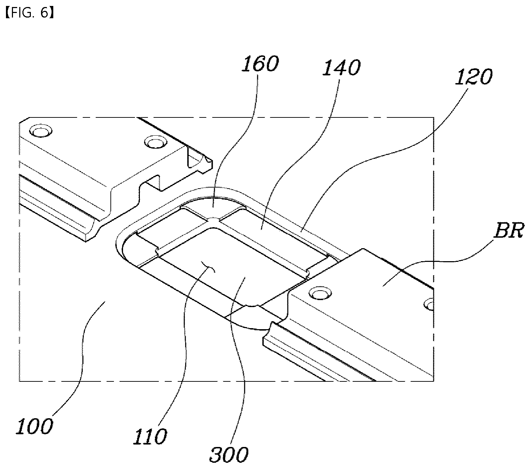

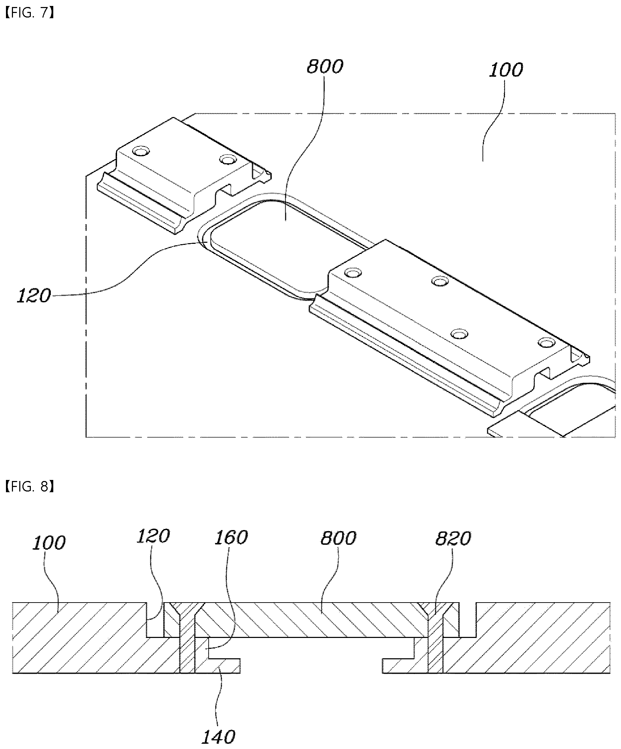

In the through hole 120 of the base plate 100, a filter cover 800 is provided as shown in FIG. 6 or FIG. 7, thereby blocking foreign substances or flames from flowing into the separation space 110. When thermal runaway occurs inside the battery pack case, the cooling device including the cooling channel 700, the cooling port 720 and the cooling hose 740 is damaged by high temperature or high pressure, and the cooling material and foreign substances leak together from the cooling device 700, 720, and 740. If foreign substances flow into the separation space 110 through the through hole 120, flow of the fluid such as a gas or cooling material is obstructed, and thus the gas or cooling material cannot be smoothly discharged to the outside. Therefore, it is necessary to prevent foreign substances from flowing into the separation space 110 by forming the filter cover 800 in the through hole 120.

In addition, when thermal runaway occurs inside the battery pack case, flames are generated in addition to gas. Even if flames spread into the separation space 110 through the through hole 120 of the base plate 100, they can be extinguished by the cooling material inside the separation space 110. However, if a large amount of flame spreads into the separation space 110, there is a risk of damaging the discharge path 500 or causing a secondary fire by meeting with combustible particles captured in the discharge path 500. Accordingly, it is necessary to prevent flames from spreading into the separation space 110 through the through hole 120. Therefore, by forming the filter cover 800 in the through hole 120 of the base plate 100, not only foreign substances leaking from the cooling device 700, 720, and 740 but also flames generated during thermal runaway can be blocked from flowing into the separation space 110 through the through hole 120.

In order to effectively block foreign substances from flowing into the separation space 110, the present disclosure provides a flange 140 formed on the inner surface of the through hole 120 and protruding toward the inside of the through hole 120, as shown in FIGS. 6 to 8, and the filter cover 800 is coupled to the flange 140. In addition, a plurality of support parts 160 may be formed on the flange 140 to protrude toward the filter cover 800, and the filter cover 800 may be mounted on the support parts 160 such that the filter cover 800 is separated from the flange 140.

The filter cover 800 has a plate shape as illustrated in FIG. 7 or FIG. 8 and is set inside the through hole 120. The outer surface of the filter cover 800 is spaced apart from the inner surface of the through hole 120, and the internal space of the battery pack case and the separation space 110 can communicate through the gap between the filter cover 800 and the through hole 120. Accordingly, foreign substances leaking from the cooling device 700, 720, and 740 can be covered by the filter cover 800, and at the same time, gas generated during thermal runaway or the cooling material from the cooling device can flow into the separation space 110 through the gap between the filter cover 800 and the through hole 120.

Since the battery pack case is built into a vehicle V and is easily exposed to impact, the filter cover 800 formed to be spaced apart from the inner surface of the through hole 120 may also be vulnerable to impact. Therefore, the filter cover 800 is fixed to the support parts 160 as shown in FIG. 8 such that the filter cover 800 is connected to the base plate 100 and thus can be stably mounted inside the through hole 120. Since the filter cover 800 needs to stably cover the through hole 120 to effectively cover foreign substances leaking from the cooling device 700, 720, and 740, the filter cover 800 is fixed to the support parts 160 and connected to the base plate 100. In this case, the filter cover 800 may be connected to the base plate 100 through a method such as bolting 820 as shown in FIG. 8. Of course, as long as the filter cover 800 can be accurately mounted on the inner surface of the through hole 120, the filter cover 800 can be fixed by various methods such as fastening using an adhesive and mechanical fastening, in addition to bolting 820.

FIG. 9 shows a battery pack BP to which the battery pack case of the present disclosure is applied and a state in which such a battery pack BP is mounted in a vehicle V. The battery pack BP of the present disclosure may be applied to various industries in addition to vehicles, and an example thereof may be an electric energy storage system (ESS). According to the battery pack case of the present disclosure, the battery pack BP including the same, and the vehicle V including the same, when the cooling device 700, 720, and 740 is installed inside the battery pack case, gas caused by thermal runaway or a cooling material leaking from the cooling device 700, 720, and 740 can be effectively discharged to the outside through the discharge path 500, thereby preventing short circuits in the battery cells.

Although the present disclosure has been described above with reference to preferred embodiments, it will be understood by those skilled in the art that various modifications and changes may be made to the present disclosure without departing from the idea and scope of the present disclosure as set forth in the following claims.

## Claims

1. A battery pack case comprising:
a base plate forming one side of the battery pack case and having a through hole formed to communicate an internal space of the battery pack case with the outside;
an outer plate spaced apart from an outer surface of the base plate, blocking the through hole from being exposed to the outside, and forming a separation space between the outer plate and the base plate; and
a discharge path formed inside the separation space and bent multiple times, one end of which is connected to the through hole and the other end of which is connected to the outside of the separation space.

2. The battery pack case of claim 1, wherein the outer plate is formed to be inclined downward toward the outside from a point corresponding to the through hole such that a height of the separation space increases toward the outside from the point corresponding to the through hole.

3. The battery pack case of claim 1, wherein the outer plate has a side wall formed along the perimeter and is connected to the base plate through the side wall to form the separation space.

4. The battery pack case of claim 1, wherein the discharge path extends in a zigzag shape from one end connected to the through hole to the other end connected to the outside, and includes a plurality of longitudinal flow paths arranged in parallel in the longitudinal direction of the outer plate,
wherein a pair of adjacent longitudinal flow paths are alternately connected to each other at one end and the other end through a widthwise connecting part, thereby forming a single discharge path.

5. The battery pack case of claim 4, wherein each longitudinal flow path is connected to an adjacent longitudinal flow path on one side at one end through the widthwise connecting part, and connected to an adjacent longitudinal flow path on the other side at the other end through the widthwise connecting part.

6. The battery pack case of claim 1, wherein a plurality of discharge paths is formed on both sides of the separation space around the through hole of the base plate,
wherein one end of each discharge path is connected to the through hole and other ends of the discharge paths are connected to the outside of the separation space at different points such that gas or a cooling material is discharged.

7. The battery pack case of claim 1, wherein the discharge path is formed such that the cross-sectional area of the discharge path increases with decreasing distance to the outside from a point corresponding to the through hole.

8. The battery pack case of claim 1, wherein a plurality of partition walls is formed in the separation space, and the discharge path is formed in a space between the partition walls,
wherein the partition walls are spaced apart from each other, the longitudinal flow paths are formed between the partition walls, and one end of the partition wall is opened to form the widthwise connecting part connecting adjacent longitudinal flow paths,
wherein a gap between a pair of adjacent partition walls increases with decreasing distance to the outside from a point corresponding to the through hole.

9. The battery pack case of claim 8, wherein lower ends of the partition walls in the separation space are connected to the outer plate in a state in which upper ends of the partition walls are connected to the base plate, the base plate forms a bottom surface of the battery pack case, battery assemblies are built into the battery pack case, and the through hole of the base plate is formed at a point between the battery assemblies built into the battery pack case.

10. The battery pack case of claim 1, wherein a cooling channel is provided between the battery assemblies built into the battery pack case and the base plate, and the through hole of the base plate is formed at a position corresponding to a cooling port of the cooling channel or a cooling hose connected to the cooling port such that a cooling material leaking from the cooling port or the cooling hose flows into the through hole due to the weight of the cooling material.

11. The battery pack case of claim 1, wherein a filter cover is formed in the through hole of the base plate such that foreign substances are prevented from flowing into the separation space, a flange is formed on the inner surface of the through hole to protrude toward the inside of the through hole, and the filter cover is coupled to the flange.

12. The battery pack case of claim 11, wherein a plurality of support parts is formed on the flange to protrude toward the filter cover, and the filter cover is mounted on the support parts such that the filter cover and the flange are spaced apart from each other.

13. The battery pack case of claim 12, wherein the filter cover is bonded to the base plate by being fixed to the support parts, or
the filter cover is formed in a plate shape and is set inside the through hole, the outer surface of the filter cover is spaced apart from the inner surface of the through hole, and the internal space of the battery pack case communicates with the separation space through the gap between the filter cover and the through hole.

14. A battery pack comprising the battery pack case of claim 1.

15. A vehicle comprising the battery pack of claim 14.
